(19) Europäisches Patentamt / European Patent Office / Office européen des brevets

(11) **EP 2 725 700 A1**

(12) **EUROPEAN PATENT APPLICATION**

(43) Date of publication:
30.04.2014 Bulletin 2014/18

(51) Int Cl.:
*H02M 7/483* (2007.01)

(21) Application number: 12189578.3

(22) Date of filing: 23.10.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology AG
8050 Zürich (CH)**

(72) Inventors:
• **Oikonomou, Nikolaos
5400 Baden (CH)**

• **Papafotiou, Georgios
8134 Adliswil (CH)**
• **Escobar, Gerardo
97115 Merida, Yucatan (MX)**

(74) Representative: **ABB Patent Attorneys
c/o ABB Schweiz AG
Intellectual Property CH-IP
Brown Boveri Strasse 6
5400 Baden (CH)**

(54) **Controlling a modular multi-level converter**

(57) A modular multi-level converter (30) comprises a plurality of converter cells (10). A method for controlling method comprises the steps of: receiving a voltage reference vector; determining a set of possible future switching states based on the reference vector; predicting future converter cell voltages for each future switching state based on a model of the modular multi-level converter (30); associating a cost value with each of the possible future switching states by evaluation a cost function on the predicted future cell voltages; selecting an optimal switching state with an optimal cost value; and applying the optimal switching state to the converter cells (10).

Fig. 1a

**(Cont. next page)**

Fig. 1b

**Description**

FIELD OF THE INVENTION

The invention relates to a method, a computer program and a computer-readable medium for controlling a modular multi-level converter as well as a controller for a modular multi-level converter.

BACKGROUND OF THE INVENTION

A modular multi-level converter (M2LC) usually comprises a plurality of converter cells (or power cells) each of which may comprise a capacitor. In each phase leg of the converter, the converter cells usually are connected in series. The converter cells furthermore comprise a switch for connecting the capacitor to the phase leg or for bypassing the capacitor.

A modular multi-level converter may enable high power AC/DC and DC/AC voltage conversion above the usual upper threshold of about 6.9 kV AC, which is the maximum voltage rating for other power converter topologies. The voltage rating of a modular multi-level converter can easily reach voltages as high as 20 kV by allowing series connection of power cells.

A basic advantage of a modular multi-level converter may be that it may be operated transformer-less. This fact may require some clarification: the voltage rating of conventional power converters usually does not exceed 6.9 kV. As a result, a step-down transformer may be required to convert the voltage level between a medium-voltage, high-power load (e.g. a 20 kV electrical machine) and the power converter. With a modular multi-level converter, the voltage rating of the power converter may be matched to this of the load.

Another important feature of a modular multi-level converter may be that it may not require complicated snubber circuits to allow balanced voltage distribution across the devices, which is often demanded in power converter topologies that require series connection of devices.

Furthermore, it may be possible to increase the converter power by scaling the voltage - rather than the current, which may allow reaching high efficiency values. With a modular multi-level converter, the efficiency may exceed 99%. The semiconductor switches of the converter cells of a modular multi-level converter may often be operated at low switching frequency, i.e. in the range 100 Hz - 500 Hz. This may be also beneficial for the converter efficiency.

A modular multi-level converter has a multi-level topology. Each phase of a modular multi-level converter may comprise multiple converter cells that allow producing output voltage waveforms of multiple levels. The number of converter cells of a modular multi-level converter may be as low as two converter cells per phase (two-level operation). But modular multi-level converters of higher converter cell count (usually more than 10 cells per phase) are also possible.

A categorization of modular multi-level converter topologies may be the following: modular multi-level converters with low converter cell count: less than 10 power cells per phase; modular multi-level converters with medium converter cell count: between 10 and 50 power cells per phase; modular multi-level converters with high converter cell count: more than 50 power cells per phase.

As the converter cell count increases, the quality of the output voltage waveforms may also increase, allowing to better approximate sinusoidal voltage waveforms, as is desired in AC applications. Operation with low output harmonic distortion of the output voltages and currents is a requirement for most industrial applications, as dictated by various international standards, such as the IEEE 519-1992 and the IEC 61000-3-6.

The structure of a modular multi-level converter may be modular: series-connected converter cells of the converter may be of relatively low voltage rating, e.g. 1 kV, and all converter cells may be identical. This offers the advantage to use inexpensive semiconductor devices of reduced voltage blocking capability such as 1.7 kV IGBTs. Manufacturing may be also easy, since only one type of converter cells may have to be constructed. Modularity also may enable seamless operation in case of failure of a converter cell: a number of inexpensive redundant converter cells may be used in each phase to achieve this. Finally, hot-swap capability may be another possible feature of a modular multi-level converter.

The high voltage capability, operation at low switching frequency, and modular structure of a modular multi-level converter make it ideal for high-power, medium-voltage industrial application. However, these advantages may come with increased complexity of control requirements:

Depending on the application, the output terminals of a modular multi-level converter are connected to the power grid (active front end operation) or to a load (power inverter application). The phase currents may have to be measured periodically and controlled to their set point values.

Each converter cell of a modular multi-level converter may be equipped with a capacitor of electrolytic or film type. This capacitor acts as a storage element of DC voltage. Inserting and/or bypassing the capacitors in the circuit may allow impressing the various voltage levels at the output terminal of the converter. The voltage of each of the capacitors may have to be controlled around a reference value, which may be equal to the voltage of the DC link that feeds the converter divided by the number of converter cells in the branch (half-phase) of a modular multi-level converter.

Internal electrical quantities of a modular multi-level converter, such as the branch energies, may have to be controlled. A characteristic feature of a modular multi-level converter may be that its phase has two branches. Each branch may be the series connection of n power cells. The output terminal of the phase may be the common connection point of the two adjacent branches. Energy exchange between the two branches of the phase is required to allow producing current at the output terminals. This procedure may have to be controlled such that desired current components are generated, while current harmonics that exert stress on the power semiconductor devices and/or on the cell capacitors are minimized. This objective is sometimes cited as "control of circulating currents".

DESCRIPTION OF THE INVENTION

Objects of the invention are to reduce switching losses of a modular multi-level converter, to enhance the performance of a modular multi-level converter, to reduce higher order harmonics produced by the modular multi-level converter and to provide an alternative method to generate switching signals for a modular multi-level converter.

This object is achieved by the subject-matter of the independent claims. Further exemplary embodiments are evident from the dependent claims and the following description.

An aspect of the invention relates to a method for controlling a modular multi-level converter.

A modular multi-level converter may comprise a plurality of converter cells, which, for example, are provided in one, two, three or more phase legs. Each phase leg may comprise two branches that are connected in series between the outputs of a DC link that provide an output of the respective phase of the converter. Each branch may comprise a plurality of converter cells connected in series. The converter may comprise two, three or more, for example 10, converter cells per branch.

The converter may be an AC/DC (active front end) converter or a DC/AC (power inverter) converter.

It is also possible that the modular multi-level converter is a direct converter with converter legs directly connecting the phases of an input and with the phases of an output. The converter may be an AC/AC converter.

According to an embodiment of the invention, the method comprises the steps of: receiving a voltage reference vector; determining a set of possible future switching states based on the reference vector; predicting future converter cell voltages for each future switching state based on a model of the modular multi-level converter; associating a cost value with each of the possible future switching states by evaluation a cost function on the predicted future cell voltages; selecting an optimal switching state with an optimal cost value; and applying the optimal switching state to the converter cells.

Each converter cell may comprise a capacitor and each switching state may determine, whether the capacitor is connected to a (phase) leg of the converter or the capacitor is bypassed. A converter cell voltage may be the capacitor voltage of the capacitor of the respective converter cell.

The method may be seen as a voltage balancing method that selects the appropriate forms of switching states such that the voltage of the capacitors in each converter cell of the modular multi-level converter is balanced around a constant reference voltage value.

A model is used for predicting future states of the converter. In such a way, the method may be seen as a model predictive direct balancing control (MPDBC) method.

The input values of the method may be based on the output of a conventional pulse width modulator, i.e. the phase state vectors that approximate a given voltage reference within a fixed time duration.

As further inputs, the method may also receive measured voltages and measured currents of the cell capacitors of the converter cells. The method may use a model of the capacitor voltage variation to predict the future values of cell capacitor voltages.

With the method, the following control objectives may be achieved: The capacitor voltages may be balanced around their nominal voltages (a converter cell reference voltage), so that they are equally voltage-stressed. Meeting this objective may mean that the energy stored in the converter is controlled and the semiconductor switches are equally voltage-stressed. At steady-state operating conditions and for a given load current distortion, the switching frequency of the semiconductor devices may not exceed a maximum preset value.

According to an embodiment of the invention, the cost function is based on differences between future converter cell voltages and a reference cell voltage of converter cells of a phase leg of the converter. An optimal cost value may be a cost value that minimizes the differences between the future converter cell voltages and reference cell voltages.

Based on the future predictions, the method may use an inherent property of a modular multi-level converter to balance the capacitor voltages around a reference converter cell voltage. This may be done by applying a cost function on the predicted future states. Switching states of the modular multi-level converter may have redundant forms that produce the same output voltage at the output of the converter but have different effects on the variation of the capacitor voltages. The appropriate redundant forms may be chosen to control the converter cells of the modular multi-level converter.

According to an embodiment of the invention and according to the model of the converter, a converter cell voltage at a switching time is linearly dependent from a converter cell current at a current time. The future states may be predicted based on a simple model for a converter cell, which assumes no or nearly no dynamic behavior of the capacitor between two time instants, for example a current time and a switching time.

According to an embodiment of the invention and according to the model of the converter, a converter cell voltage and a converter cell current are predicted for time steps between a current time and a switching time based on numerically solving a differential equation for the converter cell voltage and the converter cell current. It is also possible that a more complex model of a converter cell is used that includes a more accurate approximation of the dynamic behavior of the capacitor.

According to an embodiment of the invention, a set of redundant phase states and switching times is determined from the voltage reference vector for each phase of the converter. For example, the pulse width modulator may determine phase states for each phase of the converter as well as the switching times at which the phase states are to be applied to the converter cells. A phase state may comprise a value for each phase of the converter that indicates, which voltage level should be produced by the respective phase. It has to be noted that single-phase redundant switching states (which indicate, which converter cell has to be included or inserted in the phase and which converter cell has to be bypassed) may be associated to the same phase state.

According to an embodiment of the invention, a phase state and a switching time for a phase of the modular multi-level converter are determined for every modulation cycle. The switching state for the switching time is determined at the begin of the modulation cycle. The future prediction may extend from the sampling time instant (at the beginning of the modulation cycle) to the time instant that a switching event in any phase occurs (the switching time), for example, as commanded by the pulse width modulator. The sampling time instant may be synchronized to the pulse width modulation cycle.

Furthermore, the optimal switching state for the end of the modulation cycle may be determined at the switching time. In other words, the steps of the method may be performed at least twice for each modulation cycle and for each phase, i.e. at the beginning of the modulation cycle and at the switching time for the phase.

According to an embodiment of the invention, a sequence of possible future switching states is determined for a sequence of future time instants. It is possible that the method does not predict the state of the converter until the next time instant but also for the following next consecutive time instants.

According to an embodiment of the invention, a cost value is associated with each sequence of possible future switching states and a first switching state of an optimal sequence of switching states is applied to the converter cells. In other words, a so-called receding horizon policy may be applied. The behavior of the converter cells may be predicted for more than one time instant into the future and these sequences of switching states may be associated with a cost value. Then, only the first (i.e. the next) switching state of the optimal sequence will be applied to the converter cells (and the following predicted switching states may be discarded). For example, at the next time instant, the sequence of future switching states will be predicted again.

According to an embodiment of the invention, the set of future switching states is determined based on a single-phase redundancy of a phase state of the voltage reference vector and/or the set of future switching states is determined based on a multi-phase redundancy of phase states of the voltage reference vector. With a multi-phase converter, also multi-phase redundancies may be used for optimizing the behavior of the converter cells.

According to an embodiment of the invention, a common-mode voltage is predicted for future switching states associated with a multi-phase redundancy. An optimal switching state is selected based on minimizing the predicted common-mode voltage. The method may also minimize the common-mode voltage at the output of the converter, while respecting the primary control objective, which is the control of converter cell voltages. In such a way, the common-mode voltage at the output of the converter may be minimized.

A further aspect of the invention relates to a computer program for controlling a modular multi-level converter, which, when being executed by a processor, is adapted for performing the steps of the method as described in the above and in the following.

A further aspect of the invention relates to a computer-readable medium, on which such a computer program is stored. A computer-readable medium may be a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e.g. the Internet, which allows downloading a program code.

A further aspect of the invention relates to a controller for a modular multi-level converter, wherein the controller is adapted for performing the method as described in the above and in the following. The claimed method may be implemented on any computational hardware, for example a DSP or an FPGA.

It has to be understood that features of the method as described in the above and in the following may be features of the computer program, the computer-readable medium and the controller as described in the above and in the following and vice versa.

Summarized, the method and the controller may balance the voltages of cell capacitors of a modular multi-level converter around a constant reference value. In such a way, the converter may only produce small voltage ripples. This may be beneficial for the life time of both the cell capacitors and the power semiconductors that are subjected to low voltage stress. Another benefit may be that the voltage and current total harmonic distortion at the output of the converter may be reduced. This makes it possible to avoid a bulky and expensive output filter.

Furthermore, the method may minimize a common-mode voltage. This makes possible to avoid a bulky and expensive common-mode voltage filter.

Additionally, the switching frequency of the power semiconductor devices may not exceed a preset threshold that may be defined by their allowed thermal stress (as in the case of IGBTs) or current capability (as in the case of IGCTs). In this case, the method may be only activated when the phase state of a phase switches as demanded by the pulse width modulator. Thus, no additional switching events may have to be introduced.

Also, an operation at low fundamental frequency may be made possible with the method. This may be an important technical challenge of a modular multi-level converter. As the fundamental frequency reduces, the task of keeping the capacitor voltages around the reference value may become more difficult. The method may use the possibility to achieve this objective in real-time by evaluating all possible configurations of switching states that produce a certain amount of output voltage, as determined by the controlling pulse width modulation method and the outlined predictive control method (MPDBC).

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1a shows a circuit diagram of a converter cell for a modular multi-level converter according to an embodiment of the invention.

Fig. 1b shows a more abstract diagram of the converter cell of Fig. 1a.

Fig. 2 shows a circuit diagram of a phase leg for a modular multi-level converter according to an embodiment of the invention.

Fig. 3a shows a circuit diagram of a phase leg for a three level modular multi-level converter according to an embodiment of the invention.

Fig. 3b shows a more abstract diagram of the phase leg of Fig. 3a.

Fig. 4 shows a circuit diagram of a modular-multi-level converter according to an embodiment of the invention.

Fig. 5 schematically shows a controller for a modular-multi-level converter according to an embodiment of the invention.

Fig. 6 shows a diagram with switching states vectors of a modular-multi-level converter according to an embodiment of the invention.

Fig. 7 shows a control flow diagram for a method for controlling a modular-multi-level converter according to an embodiment of the invention.

Fig. 8 shows a waveform for a phase state for a modular-multi-level converter according to an embodiment of the invention.

In principle, identical parts are provided with the same reference symbols in the figures.

## EP 2 725 700 A1

DETAILED DESCRIPTION OF EXEMPLARY EMBODIMENTS

### I. Converter

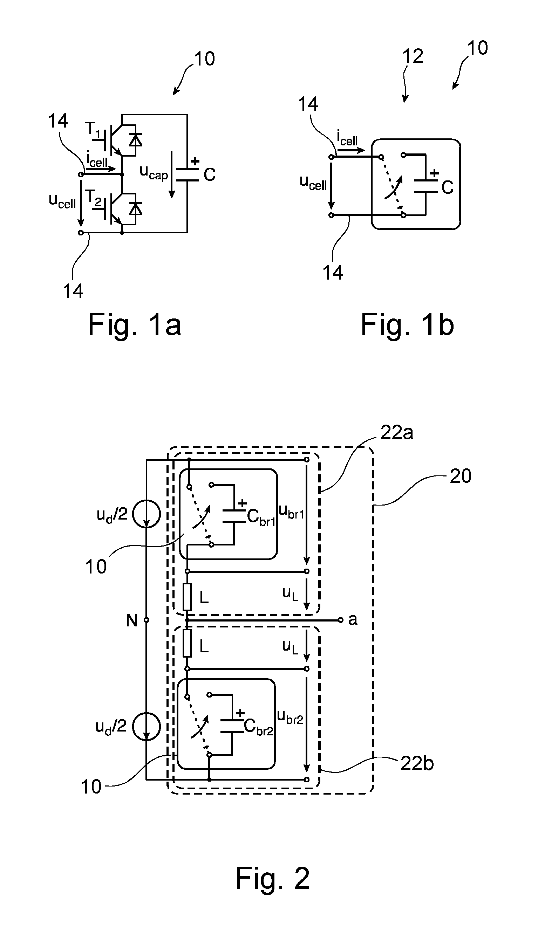

Fig. 1a shows a circuit diagram for converter cell 10 of a modular multi-level converter. The converter cell 10 comprises two semiconductor switches $T_1$ and $T_2$ connected in series and in parallel to a capacitor C. The two power semiconductor switches $T_1$ and $T_2$ are operated complementarily. The four different configuration modes of the power cell 10 are summarized in the following table.

| $T_1$ state | $T_2$ state | Power cell mode | Cell current | Capacitor voltage |
|---|---|---|---|---|
| $T_1$ ON | $T_2$ OFF | Cell inserted | $i_{cell} > 0$ | $du_{cap}/dt > 0$ |
| $T_1$ ON | $T_2$ OFF | Cell inserted | $i_{cell} < 0$ | $du_{cap}/dt < 0$ |
| $T_1$ OFF | $T_2$ ON | Cell bypassed | $i_{cell} > 0$ | $du_{cap}/dt = 0$ |
| $T_1$ OFF | $T_2$ ON | Cell bypassed | $i_{cell} < 0$ | $du_{cap}/dt = 0$ |

Fig. 1b shows a more abstract circuit diagram for a converter cell 10. In general, a converter cell 10 may comprise a switch 12 for connecting the capacitor 10 to the outputs 14 of the converter cell 10 and for short-circuiting the outputs 14. In the latter case, the converter cell 10 is bypassed.

Fig. 2 shows a circuit diagram of a phase leg 20 for a modular multi-level converter. The phase leg 20 is fed by a constant DC voltage source $u_d$. The phase leg 20 comprises two branches 22a, 22b, i.e. an upper branch 22a and lower branch 22b. Each one of the two branches 22a, 22b is a series connection of $n$ converter cells 10. A branch inductor L may be connected in series with the converter cells 10 of each branch 22a, 22b. The output terminal $a$ of the phase leg 20 is the common connection point of the upper branch 22a and lower branch 22b.

The capacitance value $C_{br1}$, $C_{br2}$ of each one of the branches 22a, 22b depends on the number of converter cells 10 that are inserted at each time instant, i.e. that are not bypassed by the switch 12. If we assume that $n$ converter cells 10 are inserted in the phase leg 20, and that $n_1 \leq n$ converter cells 10 are inserted in the upper branch 22a, then $n_2 = n - n_1$ converter cells 10 are inserted in the lower branch 22b. In this case, $C_{br1} = C/n_1$ and $C_{br2} = C/n_2 = C/(n - n_1)$, where C is the capacitance value of one converter cell 10. If all converter cells 10 of one of the two branches 22a, 22b are bypassed, then the capacitance of this branch 22a, 22b is infinite.

Assuming equal inductances of both branches 22a, 22b, the voltage $u_a$ at the output terminal $a$ with respect to the neutral point $N$ is

$$u_a = \frac{C_{br1} - C_{br2}}{C_{br1} + C_{br2} - 2\omega C_{br1} C_{br2} L} \cdot \frac{u_d}{2}. \tag{1}$$

In a further approximation, it is assumed that the impedance of the inductance L is much smaller than the impedance of the respective capacitance in each one of the two branches 22a, 22b. In this case, (1) is simplified to:

$$u_a = \frac{C_{br1} - C_{br2}}{C_{br1} + C_{br2}} \cdot \frac{u_d}{2}, \tag{2}$$

or

$$u_a = \frac{n - 2n_1}{n} \cdot \frac{u_d}{2}. \tag{3}$$

If all converter cells 10 in the upper branch 22a are bypassed, i.e. $n_1 = 0$, and the converter cells 10 in the lower branch 22b are inserted, then $u_a = +u_d/2$. If all converter cells 10 in the upper branch 22a are inserted, i.e. $n_1 = n$, and the converter cells 10 in the lower branch 22b are bypassed, then $u_a = -u_d/2$. Any other combination of $\{n_1, n_2\}$ with $n_1 + n_2 = n$ yields discrete values in ($-u_d/2$, $+u_d/2$). The requirement

7

$$n_1 + n_2 = n \qquad (4)$$

results from selecting the cell capacitance value $C$ such that the DC link voltage $u_d$ is equally shared among $n$ converter cells 10 of the phase leg 20: if the converter cells 10 of the phase leg 20 are inserted / bypassed such that $n$ converter cells 10 are inserted at any time instant, then the voltage across the individual cell capacitor C is

$$u_{cap}^* = u_d/n. \qquad (5)$$

The voltage in (5) is the cell capacitor reference voltage value. The instantaneous voltage $u_{cell}$ of each cell capacitor $C$ of the phase leg 20 is not necessarily equal to (5), because the capacitor voltage $u_{cap}$ increases or decreases when the converter cell 10 is inserted, depending on the sign of the cell current $i_{cell}$. The method described in the above and in the following may be used for balancing the individual cell capacitance voltages $u_{cap}$ around the reference voltage (5) while respecting the desired voltage at the output terminal $a$ at the phase leg 20, i.e. the phase state $u_a$.

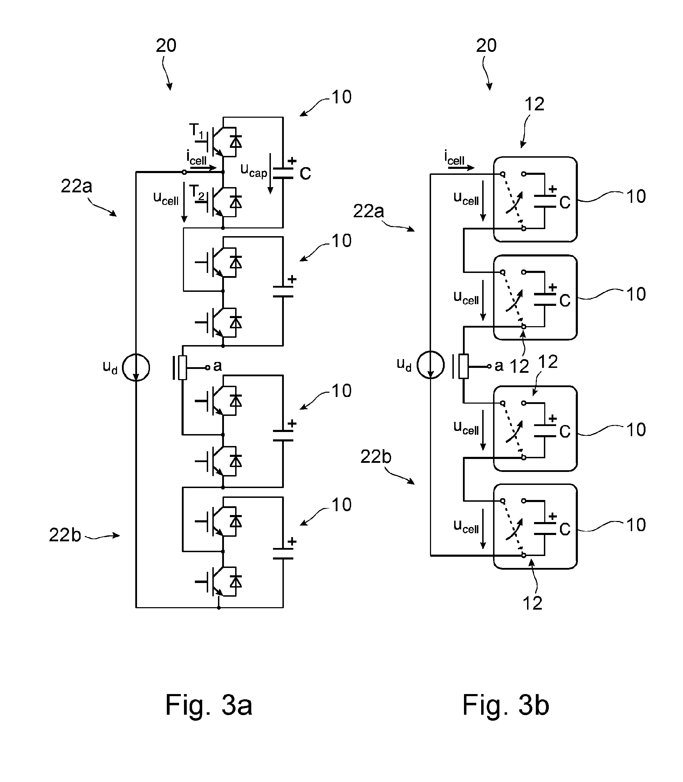

Fig. 3a shows a circuit diagram of a phase leg 20 of a of a three-level modular multi-level converter power. Fig. 3b shows a more abstract circuit diagram for a phase leg 20 with the converter cells 10 of Fig. 3a replaced by converter cells 10 shown in Fig. 1b.

Each one of the two branches 22a, 22b of the phase leg 20 has (exactly) two converter cells 10 connected in series. The cell configurations or switching states, branch voltages and phase states of this topology are described in the following table.

| switching state | branch capacitance value | upper branch voltage | lower branch voltage | phase state referred to neutral point N |
|---|---|---|---|---|
| $Cell_{11}$ = 0 $Cell_{12}$ = 0<br>$Cell_{21}$ = 1 $Cell_{22}$ = 1 | $C_{br1}$ = 0<br><br>$C_{br2}$ = C/2 | $u_{br1}$ = 0 | $u_{br2}$ = $+u_d$ | $u_a$ = $+u_d/2$ |
| $Cell_{11}$ = 0 $Cell_{12}$ = 1<br>$Cell_{21}$ = 0 $Cell_{22}$ = 1<br>$Cell_{11}$ = 1 $Cell_{12}$ = 0<br>$Cell_{21}$ = 1 $Cell_{22}$ = 0 | $C_{br1}$ = C | $u_{br1}$ = $+u_d/2$ | $u_{br2}$ = $+u_d/2$ | $u_a$ = 0 |
| $Cell_{11}$ = 0 $Cell_{12}$ = 1<br>$Cell_{21}$ = 1 $Cell_{22}$ = 0<br>$Cell_{11}$ = 1 $Cell_{12}$ = 0<br>$Cell_{21}$ = 0 $Cell_{22}$ = 1 | $C_{br2}$ = C | | | |
| $Cell_{11}$ = 1 $Cell_{12}$ = 1<br>$Cell_{21}$ = 0 $Cell_{22}$ = 0 | $C_{br1}$ = C/2<br><br>$C_{br2}$ = 0 | $u_{br1}$ = $+u_d$ | $u_{br2}$ = 0 | $u_a$ = $-u_d/2$ |

It can be observed that there is only one cell switching state for each of the phase states $u_a$ = $-u_d/2$ or $u_a$ = $+u_d/2$. However, the phase state $u_a$ = 0 can be obtained by four different cell switching states. In each of the configurations, only $n$ = 2 converter cells 10 are inserted; the remaining converter cells 10 of the phase leg 20 are bypassed.

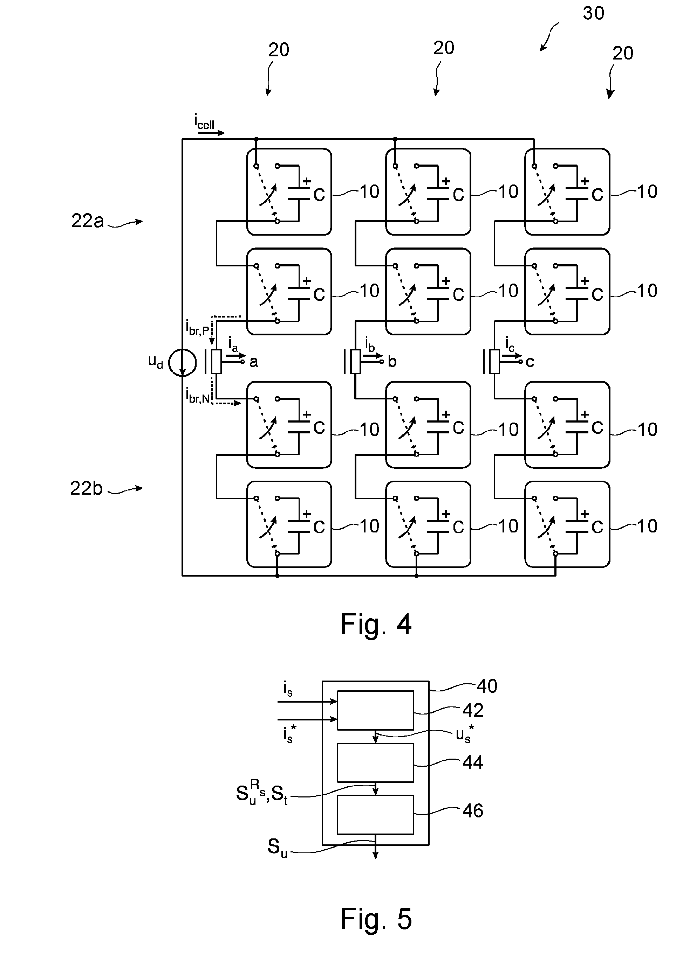

Fig. 4 shows a three-level modular multi-level converter 30 with three phase legs 20 as shown in Fig. 3b. The converter 30 is presented as a special embodiment of a general modular multi-level converter. The control method as described in the above and in the following is not restricted by the number of levels of the converter.

**II. Controller**

Fig. 5 shows a controller 40 for a modular multi-level converter 30. The controller 40 comprises three stages, a current controller 42, a pulse width modulation controller 44 and a converter cell controller 46.

In the current controller 42, the phase currents $i_a$, $i_b$, and $i_c$ of the three-phase modular multi-level converter 30 are sampled at a fixed frequency $2f_s$, equal to double of the switching frequency of the desired output voltage waveform. These phase currents are the scalar components of the respective space vector of the converter current,

$$ \boldsymbol{i}_s = \frac{2}{3}(i_a + ai_b + a^2 i_c) \qquad (6) $$

where $a = \exp(j\, 2\pi/3)$. A current controller compares the current space vector $\boldsymbol{i}_s$ to a reference current vector $\boldsymbol{i}_s^*$; ; this vector is supplied by a conventional superimposed controller of flux, power, and/or rotational speed - depending on the application.

The result of the comparison of the current space vector $\boldsymbol{i}_s$ to its reference value $\boldsymbol{i}_s^*$ is the current error vector $\Delta \boldsymbol{i}_s = \boldsymbol{i}_s^* - \boldsymbol{i}_s$. This is fed to a conventional current controller, e.g. a PI controller. The output of the PI controller is the reference voltage vector $\mathrm{u}_s^*$.    .

The reference voltage vector $\boldsymbol{u}_s^*$ is fed to the pulse width modulation controller 44, which determines redundant forms $\boldsymbol{S}_u^{R3} = \left\{ \boldsymbol{u}_1^{R3}, \boldsymbol{u}_2^{R3}, \boldsymbol{u}_3^{R3} \right\}$ of phase state vectors $\boldsymbol{S}_u = \{u_1, u_2, u_3\}$ and on-time durations $S_t = \{t_1, t_2; t_3\}$ of the three phase state vectors $\boldsymbol{S}_u$ as will be explained with reference to section III.

The converter cell controller 46 receives the redundant forms $\boldsymbol{S}_u^{R3} = \left\{ \boldsymbol{u}_1^{R3}, \boldsymbol{u}_2^{R3}, \boldsymbol{u}_3^{R3} \right\}$ and on-time durations $S_t = \{t_1, t_2; t_3\}$ and determines the switching states that will be applied to the converter cells 10 at the next time instant.

**III. Pulse width modulation**

The pulse width modulation may be enabled at the same frequency $2f_s$ that the current is sampled, i.e. at a rate that is the double of the switching frequency of the desired output voltage waveforms. The inverse of this sampling frequency is called the modulation sub-cycle, i.e. $To = 1/(2f_s)$.

The controller 44 identifies the three phase state vectors $\boldsymbol{S}_u = \{u_1, u_2, u_3\}$ that neighbor the reference voltage vector $\boldsymbol{u}_s^*$.    . This calculation is performed by solving in real-time the equation of the modulation law,

$$ \int\limits_{(T_0)} \boldsymbol{u}_s^*(t)\, dt = \int\limits_{(t_1)} \boldsymbol{u}_1(t)\, dt + \int\limits_{(t_2)} \boldsymbol{u}_2(t)\, dt + \int\limits_{(t_3)} \boldsymbol{u}_3(t)\, dt, \qquad (7) $$

where $S_t = \{t_1, t_2, t_3\}$ is the set of on-time durations of the respective phase state vectors $\boldsymbol{S}_u = \{u_1, u_2, u_3\}$.

The controller 44 calculates the redundant forms $S_u^{R_3} = \{ \boldsymbol{u}_1^{R_3}, \boldsymbol{u}_2^{R_3}, \boldsymbol{u}_3^{R_3} \}$ of the three phase state vectors $\boldsymbol{S}_u$ that neighbor the reference voltage vector. The redundant forms $\boldsymbol{u}_k^{R_3}$, $k = \{1, 2, 3\}$ of each phase state vector $\boldsymbol{u}_k$ depend on the number of voltage levels of the converter 30 and on the distance of the phase state vector from the origin of the complex plane.

Fig. 5 shows a diagram with phase state vectors of the three-level converter 30 shown in Fig. 4.

Each phase state vector $\boldsymbol{u}_k$ has three components, e.g. $\boldsymbol{u}_k = (210)$. Each of the three components is the phase state of the respective phase $a$, $b$, or $c$. When phase $x = \{a, b, c)$ is connected to the positive DC rail of the converter 30, the symbol "2" is used. The symbol "1" is used when phase $x$ is connected to the neutral point potential of the power converter; "0" means that phase $x$ is connected to the negative DC rail. The phase state vector is

$$\boldsymbol{u}_s = \frac{2}{3}(u_a + au_b + a^2 u_c), \qquad (8)$$

where $u_x = \{-u_d/2, 0, +u_d/2\}$, $x = \{a, b, c\}$, and $u_d$ is the DC link voltage of the power converter.

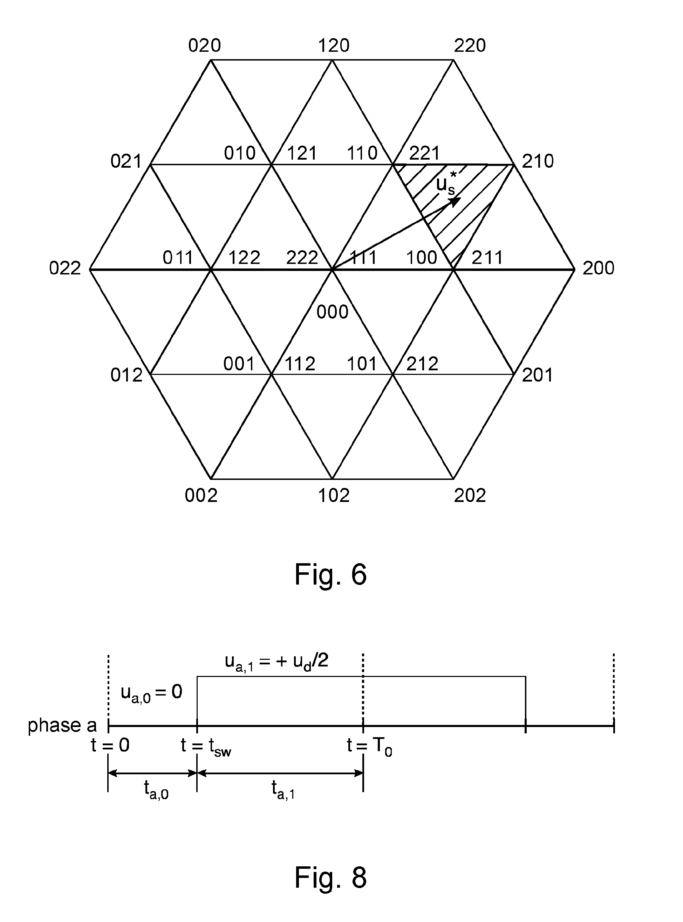

In Fig. 6, the reference voltage vector $\boldsymbol{u}_s^*$ is located inside the shaded triangle; two of the three neighboring phase state vectors have single three-phase redundancy $\boldsymbol{u}_1^{R_3} = \langle 100 \parallel 211 \rangle$, and $\boldsymbol{u}_2^{R_3} = \langle 110 \parallel 221 \rangle$, while the third phase state vector $\boldsymbol{u}_3^{R_3} = \langle 210 \rangle$ has no redundant form. The redundant forms $S_u^{R_3} = \{ \boldsymbol{u}_1^{R_3}, \boldsymbol{u}_2^{R_3}, \boldsymbol{u}_3^{R_3} \}$ of the phase state vectors $\boldsymbol{S}_u = \{u_1, u_2, u_3\}$ are called three-phase redundancies. Redundant phase state vectors produce equal differential-mode voltage at the power converter terminals, but unequal common-mode voltage.

The controller 44 also calculates the on-time durations $\boldsymbol{S}_t = \{t_1, t_2, t_3\}$ of the three phase state vectors $\boldsymbol{S}_u$ that neighbor the reference voltage vector $\boldsymbol{u}_s^*$. The on-time duration of each of the vectors depends upon the amplitude and angular position of the reference voltage vector $\boldsymbol{u}_s^*$ at the time instant that it was sampled. The sum of the on-time durations of the three phase state vectors is equal to the modulation sub-cycle,

$$t_1 + t_2 + t_3 = T_0. \qquad (9)$$

The on-time durations $\boldsymbol{S}_t$ result from the solution of (7) and (9).

## IV. Converter cell control

In the following, the converter cell control will be described with respect to the three-phase three-level converter 30 shown in Fig. 4. However, the method may be applied to a modular multi-level converter with an arbitrary number $n$ of converter cells 10 per branch and an arbitrary number of phases.

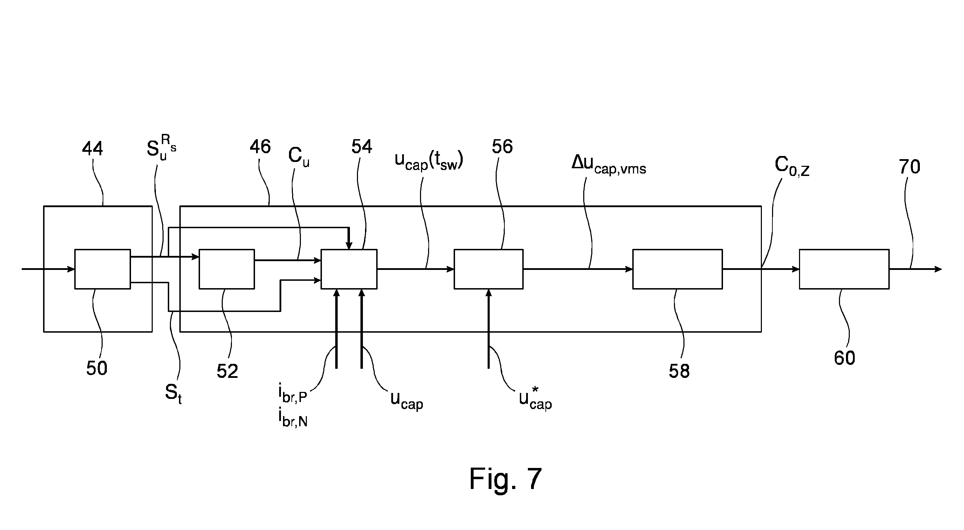

Fig. 7 shows a signal flow graph for a method for controlling the converter 30 that may perform the functionality of the controllers 44, 46 of Fig. 5.

In step 50, the pulse width modulation controller 44 receives the reference voltage vector $\boldsymbol{u}_s^*$ and determines the three-phase redundant forms $S_u^{R_3}$ and the on-time durations $S_t$ as described with respect to section III. For example, the pulse width modulation controller 44 may perform a space vector modulation method.

After that, the three-phase redundant forms $S_u^{R_3}$ and the on-time durations $S_t$ of the phase state vectors that neighbor the reference voltage vector $u_S^*$, , are fed to the controller 46.

The method performed by the controller 46 may be seen as a model predictive balancing method (MPDBC). With this method, the appropriate switching states for the phase state vectors are selected such that the capacitor voltage $u_{cap}$ of the capacitors C in each converter cell of the modular multi-level converter 30 is balanced around a constant reference voltage value.

In step 52, possible single phase switching states $C_u$ are determined from the redundant forms $S_u^{R_3}$ of the phase state vectors $S_u$.

Each three-phase redundant form $u_k^{R_3}$, , $k = \{1, 2, 3\}$ of each phase state vector $u_k$ that neighbors the reference voltage vector $u_S^*$ may have further redundant forms depending on the switching state it describes and on the number of voltage levels of the converter 30. This is an inherent property of a modular multi-level converter. These redundant forms of each switching state are called single-phase configurations or single phase switching states $C_u$.

For example, they are explained with respect to Fig. 3a and 3b with reference to phase $a$ of the three-level modular multi-level converter 30:

If the phase state is $u_a = +u_d/2$, the two converter cells 10 in the lower branch 22b of phase a are inserted; the two converter cells 10 in the upper branch 22a are bypassed. Thus, the switching state $C_+ = \langle \overline{c_1}\, \overline{c_2}\, c_3\, c_4 \rangle$ describes the phase state $u_a = +u_d/2$. This switching state is unique; no redundant switching states exist.

If the phase state is $u_a = -u_d/2$, the two converter cells 10 in the upper branch 22a of phase a are inserted; the two converter cells 10 in the lower branch 22b are bypassed. Thus, the switching state $C_- = \langle c_1 c_2 \overline{c_3 c_4} \rangle$ describes the phase state $u_a = -u_d/2$. This switching state is unique; no redundant configurations exist.

If the phase state is $u_a = 0$, four switching states for the converter cells 10 exist, $C_{np} = \langle C_{np,1} \| C_{np,2} \| C_{np,3} \| C_{np,4} \rangle$ $= \langle c_1 \overline{c_2} c_3 c_4 \| \overline{c_1} c_2 c_3 \overline{c_4} \| c_1 \overline{c_2} c_3 \overline{c_4} \| \overline{c_1} c_2 \overline{c_3} c_4 \rangle$. Thus, the phase state $u_a = 0$ exhibits triple redundancy in the case of the three-level modular multi-level converter 30.

For each phase, a set $C^{R_1} = \{C_-, C_{np}, C_+\}$ emerges, that describes all switching states of the converter cells 10 for each one of the phase states of a modular multi-level converter. A look-up table may be formed that comprises all the single-phase configurations $C_u = \{C_1^{R_1}, C_2^{R_2}, C_3^{R_3}\}$ and all three-phase redundancies $S_u^{R_3}$ of the three phase state vectors $S_u$ that neighbor the reference voltage vector $u_S^*$ at the time instant the voltage is sampled.

In step 54, for each one of the three phases of the converter 30, the method predicts the value of the capacitor voltages $u_{cap}$ of the converter cells 10 at the time instant that the next switching event takes place.

In this step, the method receives further inputs. The cell capacitor voltages $u_{cap}$ may be individually measured at a fixed frequency that is higher than the inverse of the modulation sub-cycle, i.e. $f_{pred} > 1/T_0$. Also the capacitor current values $i_{cell}$ are input to the method. Only the branch currents $i_{br,P}$ and $i_{br,N}$ of each phase may have to be measured, because all converter cells 10 of the same branch 22a, 22b are connected in series. The branch currents $i_{br,P}$, $i_{br,N}$ may be measured at a fixed frequency $f_{pred}$ and the capacitor currents $i_{cap,y}$, $y = \{1,2,3,4\}$ may be evaluated at the sampling time instant according to

$$i_{cap,y}(t) = g_y(t) \cdot i_{br}(t), \tag{10}$$

where y = {1,2,3,4} and

$$i_{br}(t) = \begin{cases} i_{br,P}(t), & y = \{1,2\} \\ i_{br,N}(t), & y = \{3,4\} \end{cases}. \tag{11}$$

In (11), the quantity $g_y(t)$ is the gate signal of the respective power cell 10, i.e.

$$g_y(t) = \begin{cases} 1, & y\text{-th cell inserted} \\ 0, & y\text{-th cell bypassed.} \end{cases} \tag{12}$$

With respect to step 54, the starting point of the prediction of the converter cell voltage $u_{cap}$ is the beginning of the actual sub-cycle.

Fig. 8 shows a waveform for a phase state for one converter leg 20, where the phase state of phase *a* is equal to $u_{a,0}$ = 0 at time instant $t$ = 0. The phase state changes at time instant $t = t_{sw}$. The new phase state is $u_{a,1} = +u_d/2$. The phase state is kept constant until the end of the modulation sub-cycle instant $t = T_0$. The values of the initial phase state, $u_a$ = 0, the final phase state, $u_{a,1} = +u_d/2$, and the switching instant $t = t_{sw}$ are derived from the phase state vectors $S_u$ and the respective on-time durations $S_t$. This information is readily available at the beginning of the modulation cycle at $t$ = 0.

The prediction of the capacitor voltage $u_{cap,y}$ with y = {1,2,3,4} at the time instant $t = t_{sw}$ is done by solving in real-time the discrete-time form of the differential equation that connects the voltage and the current of each capacitor, i.e. the model of the cell capacitor,

$$u_{cap,y}(t_{sw}) = \frac{t_{x,0}}{C} i_{cap,y}(0) + u_{cap,y}(0), \tag{13}$$

where $t_{x,0} = t_{sw}$ - 0 and x = {*a, b, c*}.

In (13), it is assumed that the variation of the capacitor current $i_{cap,y}$ is negligible over the time duration $t_{x,0}$. Thus, a linear time dependence of the capacitor voltage from the capacitor current is assumed.

Eq. (13) is evaluated for each one of the capacitor voltages $u_{cap,y}$, y = {1,2,3,4} and for each one of the three phases of the converter, x = {*a, b, c*}. The prediction of the capacitor voltages (13) is only necessary if the initial phase state $u_{x,0}$ has redundant single-phase switching states.

This is the case in the example of Fig. 8: the initial phase state of phase *a*, $u_{a,0}$ = 0 can be obtained by any of the four switching states $C_0$. The goal is to choose one of these four single-phase switching states depending on the predicted capacitor voltage values $u_{cap}$ at time instant $t = t_{sw}$. The following table summarizes the predicted cell capacitor voltages $u_{cap}$ of phase *a* at time instant $t = t_{sw}$ in the example of Fig. 8. The content of the table refers to a single-phase switching state $C_{0,1} = \langle c_1\overline{c_2c_3}c_4 \rangle$ of $C_0 = \langle C_{0,1} \| C_{0,2} \| C_{0,3} \| C_{0,4} \rangle$.

| cell switching state | capacitor current at t = 0 | predicted capacitor voltage at $t = t_{sw}$ |
|---|---|---|
| $c_1$: Cell 1 is inserted | $i_{cap,1}(0) = i_{cell,1}(0) = i_{br,P}(0)$ | $u_{cap,1}(t_{sw}) = \dfrac{t_{x,0}}{C} i_{br,P}(0) + u_{cap,1}(0)$ |
| $\overline{c_2}$: Cell 2 is bypassed | $i_{cap,2}(0) = 0$ | $u_{cap,2}(t_{sw}) = u_{cap,2}(0)$ |
| $\overline{c_3}$: Cell 3 is bypassed | $i_{cap,3}(0) = 0$ | $u_{cap,3}(t_{sw}) = u_{cap,3}(0)$ |

(continued)

| cell switching state | capacitor current at t = 0 | predicted capacitor voltage at t = $t_{sw}$ |
|---|---|---|
| $c_4$: Cell 4 is inserted | $i_{cap,4}(0) = \mathrm{i}_{cell,4}(0) = i_{br,N}(0)$ | $u_{cap,4}(t_{sw}) = \dfrac{t_{x,0}}{C} i_{br,N}(0)$ $+ u_{cap,4}(0)$ |

The right-most column of the table is a set $S_{u,cap,a}(t_{sw}\,;\,C_{0,1}) = \{u_{cap,1}, u_{cap,2}, u_{cap,3}, u_{cap,4}\}$ of predicted voltage values for all capacitors C in phase $a$ of the example in Fig. 8 at time instant $t = t_{sw}$. The set of voltage values $S_{u,cap,a}$ $(t_{sw}\,;\,C_{0,1})$ refers to the phase state $u_{a,0} = 0$ with the configuration $C_{0,1} = \langle c_1 \overline{c_2} c_3 c_4 \rangle$, and it is calculated at $t = 0$ to predict the capacitor voltages at $t = t_{sw}$.

Similar equations are derived by the method for the other three single-phase switching states of $C_0$. One predicted value of the voltage $u_{cap}$ of each capacitor C is derived for each one of the single-phase redundancies $C_0$, i.e. all switching states of phase state $u_{a,0} = 0$ are examined exhaustively. The same procedure is applied to the phase states $u_{b,0}$ and $u_{c,0}$ of the other two phases.

The three-phase predicted voltages $u_{cap}(t_{sw})$ of the cell capacitors C are described by the set $S_{u,cap}(t_{sw}\,;\,C_{0,1})$ $= \{S_{u,cap,a}(t_{sw}\,;\,C_{0,1}), S_{u,cap,b}(t_{sw}\,;\,C_{0,1}), S_{u,cap,c}(t_{sw}\,;\,C_{0,1})\}$.

In step 56, each one of the predicted voltages of the set $S_{cap,a}(t_{sw}\,;\,C_{0,1})$ is compared to the cell capacitor reference voltage $u_{cap}^*$.

The cell capacitor reference voltage $u_{cap}^*$ may be equal to the voltage of the DC link that feeds the converter 30 divided by the number of converter cells $n$ in the branch 20, $u_{cap}^* = u_d/n.$ Each predicted voltage value is subtracted from the fixed cell capacitor reference voltage $u_{cap}^*$ to yield the error in the predicted capacitor voltage $\Delta u_{cap,y} = $ , $y = \{1,2,3,4\}$. The result of these comparisons is the set $S_{cap,err,a}(t_{sw}\,;\,C_{0,1}) = \{\Delta u_{cap,1}, \Delta u_{cap,2}, \Delta u_{cap,3},$ $\Delta u_{cap,4}\}$ of the cell capacitor voltage error values which is valid at t = $t_{sw}$.

Next, the predicted root mean square value of the error in the predicted capacitor voltages $u_{cap}(t_{sw})$ is calculated,

$$\Delta u_{cap,rms}(t_{sw}\,;\,C_{0,1}) = \sqrt{\sum_{i=1}^{2n} \Delta u_{cap,i}^2}, \qquad\qquad (14)$$

where $n$ is the number of converter cells 10 per branch 20, *i.e.* $n = 2$ for the three-level converter 30.

The root mean square value (14) is a cumulative metric of the predicted error in the predicted capacitor voltages of phase $a$ at $t = t_{sw}$.

A set of predicted root mean square error values emerges,

$$\Delta u_{cap,rms}(t_{sw}\,;\,C_0) =$$
$$\{\Delta u_{cap,rms}(t_{sw}\,;\,C_{0,1}), \Delta u_{cap,rms}(t_{sw}\,;\,C_{0,2}), \Delta u_{cap,rms}(t_{sw}\,;\,C_{0,3}), \Delta u_{cap,rms}(t_{sw}\,;\,C_{0,4})\}.$$

In step 58, the predicted errors in the capacitor voltages for all possible switching states are sorted and a single-phase switching state is selected.

In particular, the root mean square error values in $\Delta u_{cap,rms}(t_{sw}\,;\,C_0)$ are sorted in descending order. The first entry of the sorted set $\Delta u_{cap,rms}(t_{sw}\,;\,C_0)$ corresponds to the switching state $C_{0,z}$ with the maximum predicted root mean square error in the cell capacitor voltages of phase $a$ at time instant $t = t_{sw}$. The index $z$ in $C_{0,z}$ is one of the values in $z = \{1,2,3,4\}$.

After that, the switching state $C_{0,z}$ is selected by the method to minimize the predicted root mean square error in the capacitor voltages $\Delta u_{cap,rms}(t_{sw}; C_0)$.

In step 60, the switching state is decoded and the corresponding switching signals 70 for the converter cells 10 of the converter 30 are evaluated. The switching state $C_{0,z}$ is activated at $t = 0$ and remains active until $t = t_{sw}$.

The steps 52 to 58 are repeated at the time instant $t = t_{sw}$ at which the phase state $u_a$ of phase $a$ changes.

In the example of Fig. 8, the starting point of the next prediction of cell capacitor voltages may be the commutation instant (switching time) $t = t_{sw}$. The ending point of the prediction is the end of the actual modulation cycle; $t = T_0$.

Thus, the steps 52 to 58 of the method are performed at least twice per phase and per modulation sub-cycle.

For example, with respect to Fig. 8, the method selects a single-phase configuration $C_{1,z}$ that minimizes the root mean square error in the capacitor voltage values $\Delta u_{cap,rms}(T_0; C_1)$ at $t = T_0$ (the end of the modulation cycle). This switching state $C_{1,z}$ is selected among the set of redundant switching states $C_1$ that corresponds to the phase state $u_{a,1}$ that is selected at $t = t_{sw}$. It is possible that the phase state does not have redundant single-phase configurations, as in the example $u_{a,1} = + u_d/2$ of the three-level voltage waveforms of Fig. 8. In this case, the unique switching state for the converter cells $C_{1,z} = C_+ = \langle \overline{c_1}\ \overline{c_2}\ c_3\ c_4 \rangle$ is selected by the method.

Furthermore, the steps 52 to 58 are performed for all three phases $a, b,$ and c of the modular multi-level converter power converter 30.

### V. Further embodiments

Optionally, a receding horizon policy may be performed by the method. With a receding horizon, the steps of the method may be performed several times to predict the optimal switching state for the next time instant.

The switching states determined for one repetition time may be used as the input switching states for the next repetition time. In such a way, sequences of future switching states are determined for each redundant form $_1\, \boldsymbol{S}_u^{R_3}$ of the phase state vectors $S_u$.

A cost value may be determined for each sequence of switching states and the first switching state of an optimal sequence with respect to the cost value may be applied to the converter cells.

To apply a receding horizon policy, the repetition rate of the method may be much higher than the inverse of the modulation cycle, $f_{pred} \gg 1/T_0$.

For example, during the time span $t_{a,0} = t_{sw} - 0$, the method may re-calculate steps 52 to 58 for selecting a switching state that can be the same or different than $C_{0,z}$.

The steps 52 to 58 of the method may be performed more than two times per modulation cycle, if the receding horizon policy is used.

The application of receding horizon may increase the computational complexity of the method but may also increase its performance and robustness, because dynamic changes in the capacitor voltages that may happen during $t_{a,0}$ can be accounted for.

As a further embodiment, multi-phase redundancies may be used for optimizing a common-mode voltage between the phase outputs of the converter 30.

The steps 52 to 58 as described above may only address the single-phase redundant switching states. When using multi-phase redundancies, the method may exploit the multi-phase redundancies $_1\, \boldsymbol{S}_u^{R_3}$ along with the single-phase configurations $_1\, C^{R_1}$ in order to increase the performance of the cell capacitor voltage balancing. This may enhance the degree of freedom of the method.

This may be useful, when the active phase state does not exhibit single-phase redundant switching states. The method may have the option to select the three-phase redundant form $\boldsymbol{u}_k^{R_3}, k = \{1, 2, 3\}$ of each phase state vector $\boldsymbol{u}_k$ so that the cell capacitor voltages are balanced in the converter cells of the phase that exhibits the maximum predicted error (14).

The inclusion of multi-phase redundancies in the method may allow minimizing the predicted common-mode voltage by selecting the redundant form of $\boldsymbol{u}_k$ that contributes the least to it. In this case, cell capacitor voltage balancing and minimization of the common-mode voltage can be viewed as two optimization criteria of a single objective function. Different weighting factors can be assigned to these two criteria.

As a further embodiment, more complex model may be used for predicting the converter cell voltage of future switching states of the converter. The modeling of the variation of the cell capacitor current may enhance the capacitor voltage balancing performance of the method.

The voltage prediction equation (13) may be augmented with a model of the variation of the branch currents. Starting from Kirchhoff's Laws, it can be proven that the following set of equations describes the relationship between voltage and current in phase $a$ of the modular multi-level converter 30:

$$L\frac{di_{\Sigma,a}}{dt} + Ri_{\Sigma,a}(t) = u_d - u_{\Sigma,a}(t) \qquad (15)$$

and

$$L\frac{di_a}{dt} + Ri_a(t) = -2u_a(t) - u_{\Delta,a}(t). \qquad (16)$$

Similar expressions can be written for phases $b$ and $c$. In (15), $u_d$ is the DC link voltage and the quantity $i_{\Sigma,a}$ is the sum of the currents of the upper and the lower branch of phase $a$, i.e.

$$i_{\Sigma,a} = i_{br,P,a} + i_{br,N,a}. \qquad (17)$$

Furthermore, in (15), the quantity $u_{\Sigma,a}$ is the sum of the cell voltages in phase $a$, i.e.

$$u_{\Sigma,a} = \sum_{y=1}^{2n} u_{cell,y,a}. \qquad (18)$$

In (16), $u_d$ is the voltage at the terminal of phase $a$ and $i_a$ is the current that flows out of this terminal, i.e.

$$i_a = i_{br,P,a} - i_{br,N,a}. \qquad (19)$$

Finally, $u_{\Delta,a}$ is the difference of the sum of cell voltages of the two branches in phase $a$, i. e.

$$u_{\Delta,a} = \sum_{y=1}^{n} u_{cell,y,a} - \sum_{y=n+1}^{2n} u_{cell,y,a}. \qquad (20)$$

It should be pointed out that equation (16) is reduced to (2) or, equivalently, to (3) if the branch inductance $L$ and the branch resistance $R$ are neglected.

The branch currents can be modeled based on the expressions (15) and (16) that described the modular multi-level converter 30. The result is then used in (10) to evaluate the capacitor currents and, finally, in (13) to improve the prediction of the cell capacitor voltages.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1.  A method for controlling a modular multi-level converter (30), the converter comprising a plurality of converter cells (10),
    the method comprising the steps of:

    receiving a voltage reference vector;
    determining a set of possible future switching states based on the reference vector;
    predicting future converter cell voltages for each future switching state based on a model of the modular multi-level converter (30);
    associating a cost value with each of the possible future switching states by evaluation a cost function on the predicted future cell voltages;
    selecting an optimal switching state with an optimal cost value;
    applying the optimal switching state to the converter cells (10).

2.  The method of claim 1,
    wherein the cost function is based on differences between future converter cell voltages and a reference cell voltage of converter cells (10) of a phase leg (20) of the converter (30);
    wherein an optimal cost value is a cost value that minimizes the differences between the future converter cell voltages and reference cell voltages.

3.  The method of claim 1 or 2,
    wherein each converter cell (10) comprises a capacitor (C) and each switching state determines, whether the capacitor (C) is connected to a phase leg (20) of the converter (30) or the capacitor (C) is bypassed,
    wherein a converter cell voltage is the capacitor voltage of the capacitor (C) of the respective converter cell (10).

4.  The method of one of the preceding claims,
    wherein, according to the model of the converter (30), a converter cell voltage of a switching time is linearly dependent from a converter cell current at a current time.

5.  The method of one of the claims 1 to 3,
    wherein, according to the model of the converter (30), a converter cell voltage and a converter cell current are predicted for time steps between a current time and a switching time based on numerically solving a differential equation for the converter cell voltage and the converter cell current.

6.  The method of one of the preceding claims,
    wherein a set of redundant phase states and switching times is determined from the voltage reference vector for each phase of the converter.

7.  The method of one of the preceding claims,
    wherein a phase state and a switching time for a phase of the modular multi-level converter are determined for every modulation cycle,
    wherein the optimal switching state for the switching time is determined at the begin of the modulation cycle and the optimal switching state for the end of the modulation cycle is determined at the switching time.

8.  The method of one of the preceding claims,
    wherein a sequence of possible future switching states is determined for a sequence of future time instants.

9.  The method of claim 8,
    wherein a cost value is associated with each sequence of possible future switching states;
    wherein a first switching state of an optimal sequence of switching states is applied to the converter cells.

10. The method of one of the preceding claims,
    wherein the set of future switching states is determined based on a single-phase redundancy of a phase state of the voltage reference vector.

11. The method of one of the preceding claims,
    wherein the set of future switching states is determined based on a multi-phase redundancy of phase states of the voltage reference vector.

12. The method of claim 11,
wherein a common-mode voltage is predicted for future switching states associated with a multi-phase redundancy;
wherein an optimal switching state is selected based on minimizing the predicted common-mode voltage.

13. A computer program for controlling a modular-multi-level converter (30), which, when being executed by a processor, is adapted for performing the steps of the method of one of claims 1 to 12.

14. A computer-readable medium, on which a computer program according to claim 13 is stored.

15. A controller (40) for a modular multi-level converter (30) adapted for performing the method of one of claims 1 to 12.

Fig. 1a

Fig. 1b

Fig. 2

Fig. 3a

Fig. 3b

Fig. 4

Fig. 5

Fig. 6

Fig. 8

Fig. 7

**Europäisches Patentamt**
**European Patent Office**
**Office européen des brevets**

# EUROPEAN SEARCH REPORT

Application Number

EP 12 18 9578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANGCHAO QIN ET AL: "Predictive Control of a Modular Multilevel Converter for a Back-to-Back HVDC System", IEEE TRANSACTIONS ON POWER DELIVERY, IEEE SERVICE CENTER, NEW YORK, NY, US, vol. 27, no. 3, 1 July 2012 (2012-07-01), pages 1538-1547, XP011454687, ISSN: 0885-8977, DOI: 10.1109/TPWRD.2012.2191577 * page 1538 - page 1541; figures 1-2 * | 1-15 | INV. H02M7/483 |
| A | US 2012/033461 A1 (PAPAFOTIOU GEORGIOS [CH] ET AL) 9 February 2012 (2012-02-09) * paragraph [0020] - paragraph [0023]; figure 1 * | 1-15 | |
| A | US 2011/018481 A1 (HILLER MARC [DE]) 27 January 2011 (2011-01-27) * paragraph [0034] - paragraph [0053]; figures 1,2 * | 1-15 | |
| A | DE 10 2009 043599 A1 (SIEMENS AG [DE]) 31 March 2011 (2011-03-31) * paragraph [0001] - paragraph [0006]; figures 1,2 * | 1-15 | TECHNICAL FIELDS SEARCHED (IPC) H02M |

The present search report has been drawn up for all claims

| Place of search | Date of completion of the search | Examiner |
|---|---|---|
| Munich | 15 April 2013 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 12 18 9578

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2013

| Patent document cited in search report | | Publication date | Patent family member(s) | | Publication date |
|---|---|---|---|---|---|
| US 2012033461 | A1 | 09-02-2012 | CN | 102405575 A | 04-04-2012 |
| | | | EP | 2382699 A1 | 02-11-2011 |
| | | | US | 2012033461 A1 | 09-02-2012 |
| | | | WO | 2010086071 A1 | 05-08-2010 |
| US 2011018481 | A1 | 27-01-2011 | CN | 101971475 A | 09-02-2011 |
| | | | DE | 102008014898 A1 | 24-09-2009 |
| | | | EP | 2255434 A1 | 01-12-2010 |
| | | | RU | 2010142502 A | 27-04-2012 |
| | | | US | 2011018481 A1 | 27-01-2011 |
| | | | WO | 2009115141 A1 | 24-09-2009 |
| DE 102009043599 | A1 | 31-03-2011 | DE | 102009043599 A1 | 31-03-2011 |
| | | | EP | 2481148 A1 | 01-08-2012 |
| | | | WO | 2011036005 A1 | 31-03-2011 |

EPO FORM P0459

For more details about this annex : see Official Journal of the European Patent Office, No. 12/82